# EUROPÄISCHE PATENTSCHRIFT

(11) **EP 0 570 442 B1**
(45) Veröffentlichungstag und Bekanntmachung des Hinweises auf die Patenterteilung: **17.05.1995**
(21) Anmeldenummer: 92904142.4
(22) Anmeldetag: 12.02.1992
(51) Int. Cl.: F16D 65/092

(54) **BREMSBACKE**
BRAKE SHOE
SEGMENT DE FREIN

(30) Priorität: 16.02.1991 DE 4104812
(43) Veröffentlichungstag der Anmeldung: 24.11.1993
(73) Patentinhaber: TEXTAR GmbH, D-51375 Leverkusen (DE)
(72) Erfinder: SCHNACK, Wilfried, D-5090 Leverkusen 1 (DE); FASBENDER, Volker, D-5068 Odenthal (DE)
(74) Vertreter: Dallmeyer, Georg, Dipl.-Ing.
(86) Internationale Anmeldenummer: EP9200297
(87) Internationale Veröffentlichungsnummer: WO9214945

(56) Entgegenhaltungen:
- EP-A- 0 373 333
- DE-A- 2 713 377
- DE-A- 3 425 406
- DE-U- 8 710 924
- PATENT ABSTRACTS OF JAPAN vol. 8, no. 152 (M-309)(1589) 14. Juli 1984 & JP, A, 59 047 533

## Beschreibung

Die Erfindung betrifft eine Bremsbacke nach dem Oberbegriff des Anspruchs 1 bzw. 14.

Bekannte Bremsbacken weisen eine Belagträgerplatte und einen Reibbelag sowie ein auf der dem Reibbelag abgewandten Seite der Belagträgerplatte angeordnetes, gegen Aufrutschen auf die Belagträgerplatte und Verdrehen gesichertes Dämpfungsblech auf, wobei die Belagträgerplatte und das Dämpfungsblech jeweils aufeinander ausgerichtete, einander angepaßte durchgehende Aussparungen aufweisen und die Aussparungen des Dämpfungsblechs in Richtung auf die Belagträgerplatte vorstehende Vorsprünge aufweisen.

Eine derartige Bremsbacke ist aus der DE-U-87 10 924 und der JP-A-58-207535 bekannt, bei denen das Dämpfungsblech mit Vorsprüngen in Aussparungen der Trägerplatte eingepreßt wird, so daß eine formschlüssige Verbindung des Belagträgers mit dem Dämpfungsblech besteht. Das bekannte Dämpfungsblech ist dabei ortsfest mit Vorspannung eingeklemmt, wodurch die Dämpfungseigenschaften beeinträchtigt werden.

Aus der DE-A-34 25 406 ist eine Bremsbacke für eine Scheibenbremse bekannt, bei der das Dämpfungsblech mit Hilfe von am Rand rechtwinklig abstehenden Blechteilen am Außenumfang der Belagträgerplatte befestigt ist.

Aus der EP-A-0 373 333 ist ein Bremsklotz mit einem zwischen einer Haltefeder und einem Belagträger angeordneten Dämpfungsblech bekannt, wobei das Dämpfungsblech auf dem Belagträger gegen Verschieben und Verdrehen gesichert ist. Dabei ist das Dämpfungsblech auf dem Belagträger form- und kraftschlüssig gehalten. Hierzu ist das Dämpfungsblech mit napfförmigen Ausprägungen versehen, die in Aussparungen der Trägerplatte eingreifen. Die napfförmigen Ausprägungen weisen konisch verlaufende Napfwände auf, die an den Umlaufkanten der Aussparungen der Trägerplatte einem hohen Verschleiß unterliegen. Ein weiterer Nachteil besteht darin, daß der Reibbelag beim Aufkleben des Dämpfungsblechs durch die Aussparung hindurch auch gegen das Dämpfungsblech stößt, was zu unerwünschten Verspannungen des Dämpfungsblechs gegenüber der Belagträgerplatte führen kann.

Der Erfindung liegt die Aufgabe zugrunde, eine Bremsbacke der eingangs genannten Art derart weiterzubilden, daß bei guter Fixierung der Lage des Dämpfungsblechs die Dämpfungseigenschaften des Dämpfungsblechs optimiert werden.

Zur Lösung dieser Aufgabe ist nach Anspruch 1 erfindungsgemäß vorgesehen, daß die Vorsprünge zumindest über einen Teil des Aussparungsumfangs verlaufen und in die entsprechenden Aussparungen der Belagträgerplatte mit einer Passung eingreifen, die ein begrenztes Bewegungsspiel des Dämpfungsblechs zuläßt. Das mit Hilfe einer Klebstoffbeschichtung auf einer gummierten Belagträgerplatte haftende Dämpfungsblech wird in seiner Lage durch die mindestens zwei einander angepaßten Aussparungen der Belagträgerplatte und des Dämpfungsblechs ausgerichtet, indem Umbördelungen oder Vorsprünge der Aussparungen des Dämpfungsblechs in die Aussparungen der Belagträgerplatte eingreifen. Dadurch, daß auch das Dämpfungsblech eine Aussparung aufweist, kann der auf der dem Dämpfungsblech gegenüberliegenden Seite der Belagträgerplatte aufgepreßte Reibbelag nicht auf das Dämpfungsblech drücken und dieses verspannen, wodurch die Dämpfungseigenschaften des Dämpfungsblechs verschlechtert würden.

Die Beweglichkeit des Dämpfungsblechs innerhalb der Aussparungen der Belagträgerplatte kann in engen vorgegebenen Grenzen festgelegt werden, wobei das Bewegungsspiel des Dämpfungsblechs individuell bei unterschiedlichen Bremsbackentypen festgelegt werden kann.

Das Bewegungsspiel kann zwischen ca. 0,2 bis 0,5 mm betragen.

Vorzugsweise ist die Aussparung in der Belagträgerplatte gestuft ausgebildet, wobei sich die Aussparung zum Dämpfungsblech hin erweitert. Die gestufte Gestaltung der Aussparungsöffnung hat den Vorteil, daß selbst bei einem übermäßigen Reibmaterialaustritt durch die Aussparung diese nicht die Umbördelungen bzw. die Vorsprünge der Aussparungen des Dämpfungsblechs berühren, so daß zuverlässig ein Anliegen des Belagmaterials an dem Dämpfungsblech verhindert ist.

Die Vorsprünge der Aussparungen des Dämpfungsblechs können um den gesamten Aussparungsumfang umlaufen und dadurch eine Umbördelung bilden, die in jeder Bewegungsrichtung des Dämpfungsblechs einen Anschlag bilden kann.

Vorzugsweise stehen die Vorsprünge rechtwinklig von dem Dämpfungsblech ab. Die Vorsprünge können dann mit der vorgegebenen Passung in der Art einer Spielpassung in die Aussparung eingreifen, ohne daß die Gefahr eines Kantenverschleißes an der Aussparungsöffnung besteht.

Dabei kann die Aussparungsöffnung der Belagträgerplatte dämpfungsblechseitig angefast sein.

Eine weitere Lösung der Aufgabe besteht nach Anspruch 14 darin, daß die Aussparung bzw. die Aussparungen des Dämpfungsblechs mindestens zwei in der Draufsicht geradlinige Kanten aufweisen, daß die geradlinigen Kanten relativ zu der durch die Symmetrieachse der Belagträgerplatte verlaufenden Radialachse gegenläufig zueinander geneigt verlaufen, daß die geradlinigen Kanten in Richtung auf die Belagträgerplatte vorstehende Laschen aufweisen, die in die entsprechenden Aussparungen der Belagträgerplatte mit einer Passung eingreifen, die ein begrenztes Bewegungsspiel des Dämpfungsblechs zulassen.

Die Erfindung ermöglicht es, das Dämpfungsblech mit Hilfe der aufeinander ausgerichteten und einander angepaßten durchgehenden Aussparungen exakt in seiner Lage zu fixieren, ohne daß es zu Verspannungen zwischen der Belagträgerplatte und dem Dämpfungsblech kommen kann, da zwischen den in Richtung auf die Belagträgerplatte abstehenden Laschen, die in die Aussparungen der Belagträgerplatte eingreifen, und diesen Aussparungen ein begrenztes Bewegungsspiel verbleibt. Ein Aufrutschen des Dämpfungsblechs auf die Trägerplatte oder ein Verdrehen des Dämpfungsblechs wird auch beim Auftreten hoher Scher- und Drehkräfte in Kombination mit den beim Bremsvorgang induzierten Schwingungen zuverlässig verhindert.

Die Lagefixierung des Dämpfungsblechs ist besonders vorteilhaft bei Erhitzung der Bremsbacke, da dann der Kleber, der das Dämpfungsblech mit der Trägerplatte verbindet, aufweicht, wodurch das Dämpfungsblech letztlich verschieblich schwimmend auf der Belagträgerplatte gelagert ist. Die erfindungsgemäßen Lösungen nach Anspruch 1 bzw. Anspruch 14 ermöglichen eine Lagefixierung des Dämpfungsblechs trotz schwimmender Anordnung des Dämpfungsblechs.

Gegenüber tiefgezogenen Bördelungen haben die Laschen den wesentlichen Vorteil, nicht rißempfindlich zu sein.

Vorzugsweise ist vorgesehen, daß die Aussparungen der Belagträgerplatte kreisförmig sind. Derartige Aussparungen der Belagträgerplatte sind fertigungstechnisch einfacher herzustellen.

Dabei kann vorgesehen sein, daß die Aussparungen des Dämpfungsblechs jeweils zwei zueinander parallele geradlinige Kanten aufweisen. Derartige rechteckförmige Aussparungen lassen sich mit einem einfachen satteldachförmigen Werkzeug in einem Arbeitsgang herstellen.

Vorzugsweise ist vorgesehen, daß die Aussparungen des Dämpfungsblechs relativ zueinander in Radialrichtung konvergieren. Bei einer solchen geometrischen Anordnung der Aussparungen ist die Krafteinleitung von dem Dämpfungsblech in die Belagträgerplatte im Belastungsfall günstiger, wobei der optimale Neigungswinkel vom Bremsentyp abhängig ist und entsprechend variiert werden kann.

Das Schneidwerkzeug zur Herstellung der Aussparungen im Dämpfungsblech kann vorteilhaft dazu verwendet werden, die Laschen für den Fügevorgang in ihre endgültige Position umzubördeln. Auf diese Weise werden zusätzliche Werkzeuge für das Umbördeln der Laschen und damit auch ein zusätzlicher Fertigungsschritt eingespart. Insbesondere werden die zur Lagefixierung benötigten Aussparungen des Dämpfungsblechs nicht durch Ausstanzen erzeugt, sondern allein durch einen kombinierten Schneid- und Bördelvorgang. Eine Nachbearbeitung der auf diese Weise hergestellten Aussparungen ist nicht erforderlich.

Im folgenden werden unter Bezugnahme auf die Zeichnungen Ausführungsbeispiele der Erfindung näher erläutert.

Es zeigen
- Fig. 1: eine Bremsbacke mit aufgeklebtem Dämpfungsblech,
- Fig. 2: einen Schnitt entlang der Linie II-II in Fig. 1,
- Fig. 3: die Belagträgerplatte,
- Fig. 4: einen Schnitt entlang der Linie IV-IV in Fig.3,
- Fig. 5: einen Teilschnitt durch ein Dämpfungsblech im Bereich einer Aussparung,
- Fig. 6: ein Ausführungsbeispiel mit konischen Aussparungen in der Belagträgerplatte,
- Fig. 7: ein weiteres Ausführungsbeispiel für ein Dämpfungsblech,
- Fig. 8: ein Dämpfungsblech mit geschnittenen Aussparungen zur Lagefixierung,
- Fig. 9: das Schneidwerkzeug,
- Fig. 10: das Ausstanzen der Dämpfungsblechkontur mit gleichzeitigem Anschnitt der Aussparungen des Dämpfungsblechs,
- Fig. 11: das Verbinden des Dämpfungsblechs mit der Belagträgerplatte,
- Fig. 12: die Lage der Laschen in der Aussparung der Belagträgerplatte, und
- Fig. 13: ein weiteres Ausführungsbeispiel eines Dämpfungsblechs.

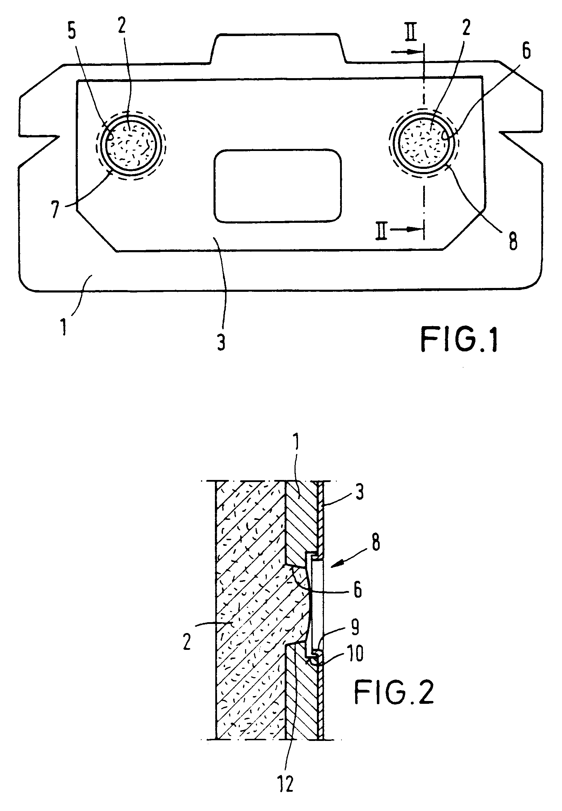

Die in Fig.1 gezeigte Bremsbacke besteht aus einer Belagträgerplatte 1, die auf ihrer einen Seite den Belag 2 und auf der dem Belag 2 abgewandten Seite ein Dämpfungsblech 3 aufnimmt. Das Dämpfungsblech 3 ist auf der Belagträgerplatte 1 vorzugsweise aufgeklebt.

Sowohl die Belagträgerplatte 1 als auch das Dämpfungsblech 3 gemäß dem Ausführungsbeispiel der Fig. 1 weisen mindestens jeweils zwei einander angepaßte kreisförmige Aussparungen 5,7 bzw. 6,8 auf, wobei die Aussparungen 7,8 des Dämpfungsblechs 3 in Richtung auf die Belagträgerplatte 1 abstehende Vorsprünge 9 aufweisen, die in die Aussparungen 5,6 der Belagträgerplatte eingreifen. Die Aussparungen 7,8 des Dämpfungsblechs 3 sind konzentrisch zu den entsprechenden Aussparungen 5,6 der Belagträgerplatte 1.

Fig. 2 zeigt ein Ausführungsbeispiel, bei dem die Belagträgerplatte 1 eine gestufte Aussparung 6 aufweist, wobei der belagseitige Aussparungsabschnitt 12 einen kleineren Durchmesser aufweist als der dämpfungsblechseitige Aussparungsabschnitt 10. Darüber hinaus ist der belagseitige Aussparungsabschnitt 12 leicht konisch gestaltet, so daß sich die Aussparungsöffnung im belagseitigen Aussparungsabschnitt 12 zum Dämpfungsblech 3 hin verengt. Die Vorsprünge 9 des Dämpfungsblechs 3, die auch aus einer Umbördelung bestehen können, greifen in den erweiterten Aussparungsabschnitt 12 ein, wobei die Außenabmessungen der Vorsprünge um ein bestimmtes Maß geringer sind als die Innenabmessung des dämpfungsseitigen Aussparungsabschnitts 10, so daß das grundsätzlich in den Aussparungen 5,6 der Belagträgerplatte 1 fixierte Dämpfungsblech 3 eine entsprechend dem vorgegebenen Spiel definierte zweiachsige Bewegungsmöglichkeit aufweist. Auf diese Weise ist einerseits die Lage des Dämpfungsblechs 3 mit ausreichender Genauigkeit und Festigkeit fixiert aber andererseits das Dämpfungsverhalten nicht durch absolut kraft- und formschlüssige Verbindungen verschlechtert. Im Resultat ergibt sich eine verbesserte Schwingungsdämpfung.

Wesentlich ist dabei auch, daß beim Aufpressen des Bremsbelags 2 dieser durch die Aussparungen 5,6 in unterschiedlichem Umfang hindurchtreten kann, ohne das Dämpfungsblech 3 zu berühren und dadurch dessen Dämpfungseigenschaften zu beeinträchtigen.

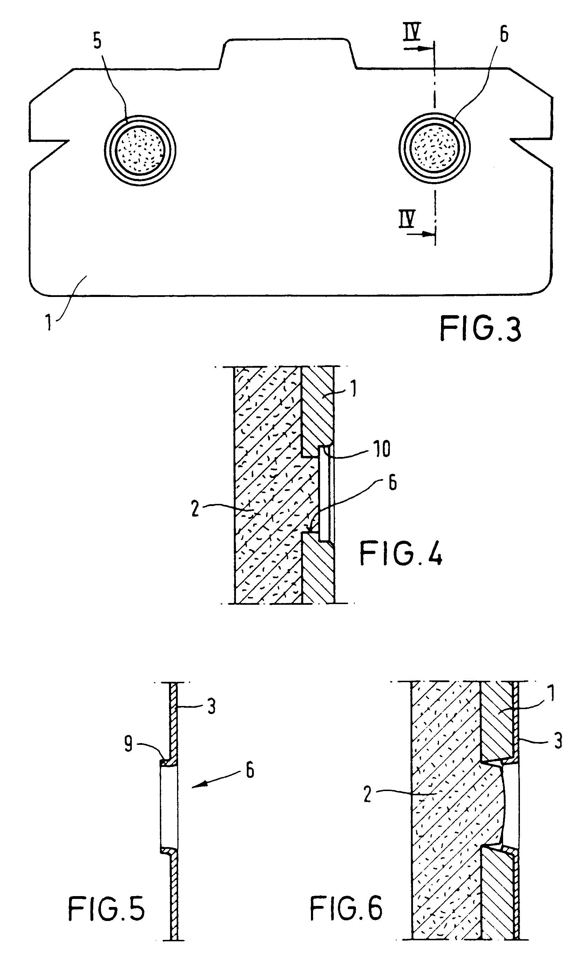

Fig. 3 zeigt die Belagträgerplatte 1 mit den Aussparungen 5,6. Es sei angemerkt, daß kreisförmige Aussparungen 5,6,7 und 8 besonders zweckmäßig sind, daß aber die grundsätzliche Idee, das Dämpfungsblech 3 mit einer vorgegebenen Passung in Aussparungen der Belagträgerplatte 1 einzusetzen, auch auf andere Aussparungskonturen Anwendung finden kann.

Des weiteren können die Aussparungen 5,6 in der Belagträgerplatte 1 ohne Abstufung mit rechtwinklig zu der Belagträgerplattenoberfläche verlaufenden Wänden versehen sein.

Bei einem weiteren Ausführungsbeispiel ohne gestufte Aussparungen 5,6 können die Wände der Aussparungen 5,6 konisch in Richtung auf das Dämpfungsblech 3 erweitert sein, so daß sich selbst bei Durchtritt des Belagmaterials 2 durch die Aussparungen 5,6 keine Kollision mit dem Dämpfungsblech 3 ergibt.

Bei dem Ausführungsbeispiel der Fig. 4 ist erkennbar, daß der dämpfungsblechseitige Aussparungsabschnitt 10 an seinem Aussparungsrand angefast ist, um einem Verschleiß des Dämpfungsblechs 3 noch besser vorzubeugen.

Wie aus Fig. 5 hervorgeht, stehen die Vorsprünge 9 des Dämpfungsblechs 3 vorzugsweise im rechten Winkel von dem Dämpfungsblech ab, so daß selbst in dem Fall, daß die dämpfungsblechseitigen Aussparungsöffnungen der Aussparungen 5,6 nicht angefast sind, ein Verschleiß des Dämpfungsblechs weitestgehend vermieden ist.

Wesentlich ist hierfür auch, daß die Vorsprünge 9 die Aussparungswände der Aussparungen 5,6 gerade nicht berühren, sondern von diesen beispielsweise einen Abstand von ca. 0,2 bis 0,5 mm aufweisen.

Bei gestuften Aussparungen 5,6 der Belagträgerplatte 1 haben die Vorsprünge 9 einen ausreichenden Abstand von der Abstufung, so daß selbst bei Aufnahme von Axialkräften sichergestellt ist, daß das Dämpfungsblech mit seinen Vorsprüngen 9 nicht die Belagträgerplatte 1 in Axialrichtung berührt.

Die Aussparungen 5,6,7,8 können auch eine vieleckige Außenkontur aufweisen, so daß sie gleichzeitig als Verdrehsicherung dienen können. In diesem Fall kann jeweils eine Aussparung im Dämpfungsblech 3 und in der Belagträgerplatte 1 ausreichend sein.

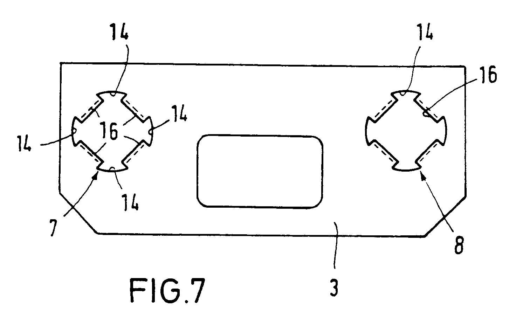

Fig. 7 zeigt ein weiteres Ausführungsbeispiel eines Dämpfungsblechs 3 mit besonders gestalteten Aussparungen 7,8. Die Aussparungen 7,8 bestehen aus einer im Prinzip kreisförmigen Ausstanzung 14, die jedoch von Laschen 16 unterbrochen wird, die im Ausführungsbeispiel mit einem Winkelabstand von 90° voneinander angeordnet sind, so daß sich jeweils zwei Laschen 16 in einer Aussparung 7,8 gegenüberstehen. Die Laschen 16 sind relativ zur Oberfläche des Dämpfungsblechs 3 um 90° umgebogen und tauchen in die jeweilige kreisförmige oder polygone Aussparung 5,6 der Belagträgerplatte 1 ein. Bei dem Ausführungsbeispiel der Fig.7 bestehen die Vorsprünge 9 aus den rechteckförmigen, ebenen Laschen 16.

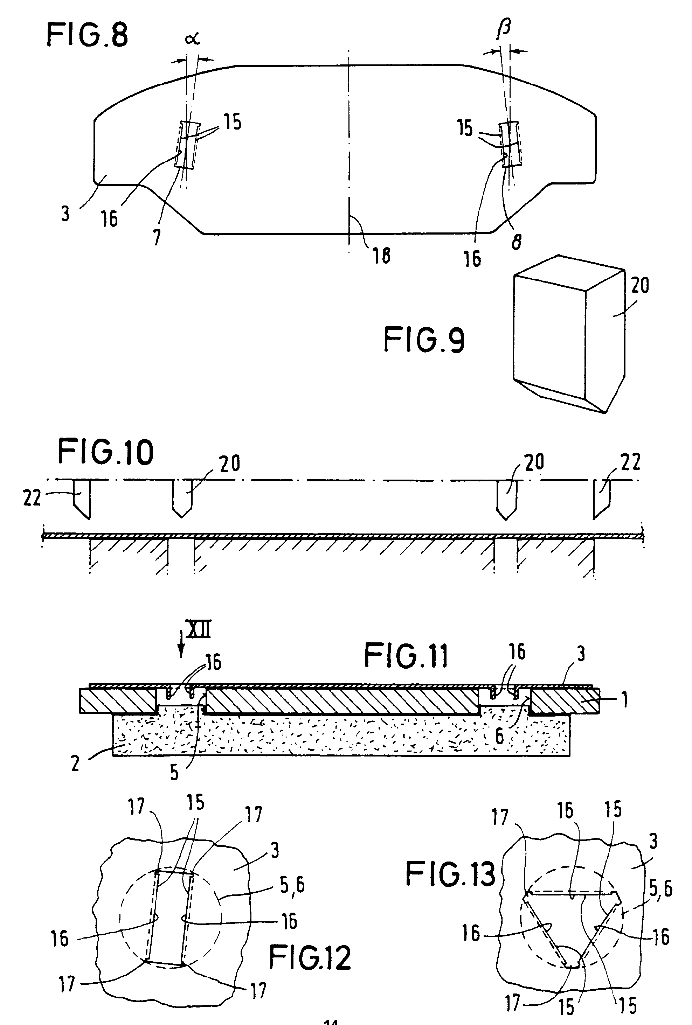

Fig. 8 zeigt ein für eine aus einer Belagträgerplatte 1 und einem Reibbelag 2 bestehende Bremsbacke bestimmtes Dämpfungsblech 3, das auf der dem Reibbelag 2 abgewandten Seite der Belagträgerplatte 1 vorzugsweise aufgeklebt wird.

Sowohl die Belagträgerplatte 1 als auch das Dämpfungsblech 3 weisen jeweils zwei aufeinander ausgerichtete Aussparungen 5,7 bzw. 6,8 auf, wobei die Aussparungen 7,8 des Dämpfungsblechs 3 in Richtung auf die Belagträgerplatte 1 in Form von Vorsprüngen an die Aussparungen 5,6 angepaßte abstehende Laschen 16 aufweisen, die in die kreisförmigen Aussparungen 5,6 der Belagträgerplatte 1 eingreifen.

Die Aussparungen 7,8 des Dämpfungsblechs 3 sind im wesentlichen rechteckförmig, wobei die kurzen Seiten keine Laschen aufweisen, während die langen Seiten der rechteckförmigen Aussparungen 7,8 die bereits erwähnten in Richtung auf die Belagträgerplatte 1 abstehenden Laschen 16 aufweisen, die in Draufsicht gesehen, geradlinige Kanten 15 bilden.

Die Aussparungen 7,8 sind relativ zu der durch die Symmetrieebene der Bremsbacke verlaufenden Radialachse 18 der zu der Bremsbacke zugehörigen Scheibenbremse unter einem geringen Winkel, vorzugsweise gegeneinander geneigt, so daß sie in Radialrichtung nach außen leicht konvergieren.

Die Anordnung der Aussparungen 7,8 in Fig. 8, nämlich mit zueinander gegenläufigen Winkeln α, β relativ zu der Radialachse 18, ermöglicht insbesondere eine vorteilhafte Dämpfungsblechfixierung in Radialrichtung der Scheibenbremse.

Der Neigungswinkel zur Radialachse 18 beträgt vorzugsweise zwischen 0° und 5° und wird für jedes Fahrzeug und jeden Bremsentyp individuell festgelegt. Dabei ist der zu wählende Winkel beispielsweise von folgenden Parametern abhängig: Belaggröße, Belagsteifigkeit, Reibverhältnisse und Reibkräfte.

Die Laschen 16 der Aussparungen 7,8 weisen gegenüber den kreisförmigen Aussparungen 5,6 ein Bewegungsspiel auf, so daß die Laschen 16 mit ihren seitlichen schmalen Stirnflächen 17 die Aussparungen 5,6 im kräftefreien Zustand nicht berühren, wodurch die Dämpfungseigenschaften des Dämpfungsblechs nicht beeinträchtigt werden.

Im Belastungsfall erfolgt eine Zweipunktauflage der Laschen 16 innerhalb der Aussparungen 5,6, so daß eine günstige Krafteinleitung in die Belagträgerplatte 1 erfolgen kann und ein Aufrutschen des Dämpfungsblechs 3 auf die Belagträgerplatte 1 zuverlässig verhindert wird.

Die Lage des Dämpfungsblechs 3 wird demzufolge mit ausreichender Genauigkeit und Festigkeit fixiert, wobei das Dämpfungsverhalten nicht durch kraft- oder formschlüssige Verbindungen verschlechtert wird. Im Resultat ergibt sich eine verbesserte Schwingungsdämpfung.

Wie aus Fig. 11 ersichtlich kann der Reibbelag 2 beim Aufkleben des Dämpfungsblechs in den Aussparungen 5,6 der Belagträgerplatte 1 nicht die Laschen 16 berühren, so daß die Dämpfungseigenschaften des Dämpfungsblechs 3 auch nicht durch den Reibbelag 2 beeinträchtigt werden können.

Fig. 10 zeigt den Fertigungsschritt zur Herstellung des Dämpfungsblechs 3 mit Stanzwerkzeugen 22, die die Außenkontur des Dämpfungsblechs 3 bestimmen, sowie mit Schneidwerkzeugen 20, die die Aussparungen 7,8 des Dämpfungsblechs 3 nicht ausstanzen sondern schneiden. Das zugehörige Schneidwerkzeug 20 ist mit seiner Schneidspitze in Fig. 9 perspektivisch dargestellt. Die Schneidspitze weist eine satteldachförmige Form auf, ähnlich der eines auf dem Kopf stehenden Hausdaches. Das Schneidwerkzeug erzeugt einen doppel-T-förmigen Schnitt mit einer in der Mitte zwischen den geradlinigen Kanten 15 liegenden Hauptschnittlinie und zwei orthogonal hierzu verlaufenden, von den seitlichen Stirnkanten des Schneidwerkzeugs 20 erzeugten weiteren Schnittlinien, die die kurzen Seiten der im wesentlichen rechteckförmigen Aussparungen 7,8 ohne Bildung von Laschen schneiden.

Durch die spezielle Gestaltung des Schneidwerkzeuges 20 werden während des Schneidvorganges als doppel-T-Schnitt gleichzeitig die beiden Laschen 16 erzeugt und bei dem tieferen Eindringen des Schneidwerkzeugs 20 umgebördelt, so daß anstelle von zwei Arbeitsvorgängen, nämlich Ausstanzen und Umbördeln, ein einziger Schneidvorgang mit einem einzigen Schneidwerkzeug 20 tritt.

Nach dem Herausfahren des Schneidwerkzeugs 20 können die Laschen geringfügig zurückfedern, so daß das erwünschte Spiel zwischen den Laschen 16 und den Wandungen der Aussparungen 5,6 bei gleichzeitig optimaler Positionierung des Dämpfungsblechs 3 verbleibt.

Bei dem Ausführungsbeispiel nach Fig. 13 kann auch nur eine einzige Aussparung, z.B. eine dreieckförmige mit gleichschenkligem oder gleichseitigem Seitenverhältnis vorgesehen sein, bei denen beispielsweise nur die gleichlangen Schenkel Laschen 16 aufweisen oder im Falle einer gleichseitigen Aussparung alle geradlinigen Kanten 15.

Insbesondere bei gleichseitigem Seitenverhältnis der dreieckförmig in die Aussparungen 5,6 eingreifenden Laschen 16 kann bei relativ zu der Radialachse 18 symmetrisch angeordneten Aussparungen 7,8 die durch die Spitze der ein Dreieck bildenden Laschen 16 verlaufende Symmetrieachse entsprechend Fig. 8 einen Neigungswinkel α, β zur Radialachse 18 einnehmen.

Das Dämpfungsblech 3 kann zusätzlich ein- oder beidseitig eine Gummibeschichtung aufweisen, die insbesondere die von einem Bremskolben übertragenen Schwingungen dämpfen kann.

## Patentansprüche

1. Bremsbacke mit einer Belagträgerplatte (1) und einem Reibbelag (2), sowie einem auf der dem Reibbelag (2) abgewandten Seite der Belagträgerplatte (1) angeordneten, gegen Aufrutschen auf die Belagträgerplatte (1) und Verdrehen gesicherten Dämpfungsblech (3), wobei die Belagträgerplatte (1) und das Dämpfungsblech (3) jeweils aufeinander ausgerichtete, einander angepaßte durchgehende Aussparungen (5,6, 7,8) und die Aussparungen (7,8) des Dämpfungsblechs (3) in Richtung auf die Belagträgerplatte (1) vorstehende Vorsprünge aufweisen, **dadurch gekennzeichnet**,
daß die Vorsprünge (9,16) zumindest über einen Teil des Aussparungsumfangs verlaufen und in die entsprechenden Aussparungen (5,6,10) der Belagträgerplatte (1) mit einer Passung eingreifen, die ein begrenztes Bewegungsspiel des Dämpfungsblechs (3) zuläßt.

2. Bremsbacke nach Anspruch 1, dadurch gekennzeichnet, daß die Vorsprünge (9,16) einen Abstand von den Aussparungswänden der Aussparungen (5,6) von ca. 0,2 bis 0,5 mm einhalten.

3. Bremsbacke nach Anspruch 1 oder 2, dadurch gekennzeichnet, daß die Aussparungen (5,6) in der Belagträgerplatte (1) gestuft ausgebildet sind und zum Dämpfungsblech (3) hin einen erweiterten Aussparungsabschnitt (10) aufweisen.

4. Bremsbacke nach Anspruch 3, dadurch gekennzeichnet, daß der belagseitige Aussparungsabschnitt (12) sich zum Dämpfungsblech (3) hin konisch verengt.

5. Brembacke nach Anspruch 1 oder 2, dadurch gekennzeichnet, daß die Aussparungen (5,6) in der Belagträgerplatte (1) sich konisch in Richtung auf das Dämpfungsblech (3) verengen.

6. Bremsbacke nach einem der Ansprüche 1 bis 5, dadurch gekennzeichnet, daß die Vorsprünge (9) um den gesamten Aussparungsumfang umlaufen.

7. Bremsbacke nach einem der Ansprüche 1 bis 6, dadurch gekennzeichnet, daß die Vorsprünge (9) rechtwinklig von dem Dämpfungsblech (3) abstehen.

8. Brembacke nach einem der Ansprüche 1 bis 7, dadurch gekennzeichnet, daß die Aussparungsöffnung (14) der Belagträgerplatte (1) dämpfungsblechseitig (3) angefast ist.

9. Bremsbelag nach einem der Ansprüche 1 bis 8, dadurch gekennzeichnet, daß das Dämpfungsblech (3) auf die Belagträgerplatte (1) aufgeklebt ist.

10. Bremsbacke nach einem der Ansprüche 1 bis 9, dadurch gekennzeichnet, daß die Aussparungen eine polygone Außenkontur aufweisen.

11. Bremsbacke nach einem der Ansprüche 1 bis 9, dadurch gekennzeichnet, daß die Belagträgerplatte (1) und das Dämpfungsblech (3) jeweils mindestens zwei Aussparungen (5,6,7,8) mit kreisförmiger Kontur aufweisen.

12. Bremsbacke nach einem der Ansprüche 1 bis 9, dadurch gekennzeichnet, daß die Vorsprünge (9) aus mehreren in gleichmäßigem Winkelabstand voneinander angeordneten Laschen (16) bestehen, die von einer kreisförmigen Ausstanzung (14) der jeweiligen Aussparung (7,8) abstehen und in eine kreisförmige oder polygone Aussparung (5,6) der Belagträgerplatte (1) eingreifen.

13. Bremsbacke nach Anspruch 12, dadurch gekennzeichnet, daß die Laschen (16) eine Rechteckform aufweisen.

14. Bremsbacke für eine Scheibenbremse, mit einer relativ zu einer zu der Rotationsachse der Scheibenbremse parallelen und orthogonalen Ebene der Schreibenbremse symmetrischen Belagträgerplatte (1) und einem Reibbelag (2), sowie einem auf der dem Reibbelag (2) abgewandten Seite der Belagträgerplatte (1) angeordneten, gegen Aufrutschen auf die Belagträgerplatte (1) und Verdrehen gesicherten Dämpfungsblech (3), wobei die Belagträgerplatte (1) und das Dämpfungsblech (3) jeweils mindestens eine aufeinander ausgerichtete durchgehende Aussparung (5,6,7,8) und die Aussparungen (7,8) des Dämpfungsblechs (3) in Richtung auf die Belagträgerplatte (1) vorstehende Vorsprünge aufweisen,
**dadurch gekennzeichnet**,
- daß die Aussparung bzw. die Aussparungen (7,8) des Dämpfungsblechs (3) mindestens zwei in der Draufsicht geradlinige Kanten (15) aufweisen,
- daß die geradlinigen Kanten (15) relativ zu der durch die Symmetrieachse der Belagträgerplatte (1) verlaufenden Radialachse (18) gegenläufig zueinander geneigt verlaufen,
- daß die geradlinigen Kanten (15) in Richtung auf die Belagträgerplatte vorstehende Laschen (16) aufweisen, die in die entsprechenden Aussparungen (5,6,10) der Belagträgerplatte (1) mit einer Passung eingreifen, die ein begrenztes Bewegungsspiel des Dämpfungsblechs (3) in einer zu den Kanten (15) parallelen Richtung zulassen.

15. Bremsbacke nach Anspruch 14, dadurch gekennzeichnet, daß die Neigung der geradlinigen Kanten (15) relativ zu der Radialachse (18) unter einem Winkel zwischen 0 und 5° verläuft.

16. Bremsbacke nach Anspruch 14 oder 15, dadurch gekennzeichnet, daß die Aussparungen (7,8) jeweils zwei zueinander parallele geradlinige, mit Laschen (16) versehene Kanten (15) aufweisen.

17. Bremsbacke nach einem der Ansprüche 14 bis 16, dadurch gekennzeichnet, daß die geradlinigen Kanten (15) der Aussparungen (7,8) des Dämpfungsblechs (3) relativ zueinander in Radialrichtung nach außen konvergieren.

18. Bremsbacke nach Anspruch 14, dadurch gekennzeichnet, daß die Aussparungen (7,8) drei geradlinige Kanten (15) aufweisen, deren Laschen (16) dreieckförmig in die Aussparungen (5,6) eingreifen.

19. Bremsbacke nach Anspruch 14 bis 18, dadurch gekennzeichnet, daß die Aussparungen (5,6) der Belagträgerplatte (1) kreisförmig sind und daß das Bewegungsspiel zwischen den seitlichen Enden (17) der Laschen (16) und den Aussparungen (5,6) der Belagträgerplatte (1) besteht.

## Claims

1. A brake pad comprising a lining support plate (1) and a frictional lining (2), as well as a damper shim (3) arranged on the side of said lining support plate (1) averted from said frictional lining (2) and being secured against slipping onto said lining support plate (1) and against twisting, said lining support plate (1) and said damper shim (3) each having throughgoing recesses (5, 6, 7, 8) aligned with and adapted to each other and said recesses (7, 8) of the damper shim (3) having projections (9) protruding towards said lining support plate (1),
characterized in
- that said projections (9, 16) extend at least over a portion of the circumference of said recess and engage the corresponding recesses (5, 6) of said lining support plate (1) with a fit that allows for a limited clearance of motion of said damper shim (3).

2. The brake pad of claim 1, characterized in that said projections (9, 16) keep a distance of about 0.2 to 0.5 mm from the walls of said recesses (5, 6).

3. The brake pad of claim 1 or 2, characterized in that said recesses (5, 6) are formed stepped in said lining support plate (1) and have a recess portion (10) being enlarged towards said damper shim (3).

4. The brake pad of claim 3, characterized in that the lining-side recess portion (12) tapers conically towards said damper shim (3).

5. The brake pad of claim 1 or 2, characterized in that said recesses (5, 6) in said lining support plate (1) taper conically towards said damper shim (3).

6. The brake pad of one of claims 1 to 5, characterized in that said projections (9) extend around the entire circumference of said recess.

7. The brake pad of one of claims 1 to 6, characterized in that said projections (9) extend at right angles from said damper shim (3).

8. The brake pad of one of claims 1 to 7, characterized in that said recess opening (14) of said lining support plate (1) is chamfered on its damper shim side (3).

9. The brake pad of one of claims 1 to 8, characterized in that said damper shim (3) is glued to said lining support plate (1).

10. The brake pad of one of claims 1 to 9, characterized in that said recesses have a polygonal outer contour.

11. The brake pad of one of claims 1 to 9, characterized in that said lining support plate (1) and said damper shim (3) each have at least two recesses (5, 6, 7, 8) with circular contour.

12. The brake pad of one of claims 1 to 9, characterized in that said projections (9) consist of a plurality of tongues (16) spaced at equal angular distances from each other, said tongues projecting from a circular punched hole (14) of the respective recess (7, 8) and engaging a circular or polygonal recess (5, 6) of said lining support plate (1).

13. The brake pad of claim 12, characterized in that said tongues (16) are rectangular in shape.

14. A brake pad for a disk brake with a lining support plate (1) symmetric relative to a plane of said disk brake that is parallel and orthogonal to the rotational axis of said disk brake and with a frictional lining (2), as well as a damper shim (3) arranged on the side of said lining support plate (1) averted from said frictional lining (2) and being secured against slipping onto said lining support plate (1) and against twisting, said lining support plate (1) and said damper shim (3) each having at least one throughgoing recess (5, 6, 7, 8) aligned with each other and said recesses (7, 8) of the damper shim (3) having projections (9) protruding towards said lining support plate (1),
characterized in
- that, in top plan view, said recess or said recesses (7, 8) of said damper shim (3) have at least two straight edges (15),
- that said straight edges (15) extend oppositely inclined relative to the radial axis (18) extending through the axis of symmetry of said lining support plate (1), and
- that said straight edges (15) have tongues (16) protruding towards said lining support plate and engaging the corresponding recesses (5, 6) of said lining support plate (1) with a fit that allows for a limited clearance of motion of said damper shim (3) in a direction parallel to said edges (15).

15. The brake pad of claim 14, characterized in that the inclination of the straight edges (15) relative to the radial axis (18) is under an angle of 0° to 5°.

16. The brake pad of claim 14 or 15, characterized in that said recesses (7, 8) each have mutually parallel straight edges (15) having tongues (16) provided thereon.

17. The brake pad of one of claims 14 to 16, characterized in that said straight edges (15) of said recesses (7, 8) of said damper shim (3) converge outward relative to each other in radial direction.

18. The brake pad of claim 14, characterized in that said recesses (7, 8) have three straight edges (15), the tongues (16) of which triangularly engage said recesses (5, 6).

19. The brake pad of one of claims 14 to 18, characterized in that said recesses (5, 6) of said lining support plate (1) are circular and that the clearance of motion exists between the lateral ends (17) of said tongues (16) and said recesses (5, 6) of said lining support plate (1).

## Revendications

1. Segment de frein connu comportant une plaque porte-garniture (1) et une garniture de friction (2) ainsi qu'une tôle d'amortissement (3) agencée sur le côté de la plaque porte-garniture (1) opposé à la garniture de friction (2) et fixée pour éviter tout glissement sur la plaque porte-garniture (1) et toute rotation, la plaque porte-garniture (1) et la tôle d'amortissement (3) présentant respectivement des évidements continus (5, 6, 7, 8) alignés les uns sur les autres et adaptés l'un à l'autre et les évidements (7, 8) de la tôle d'amortissement (3) présentant des saillies dressées dans la direction de la plaque porte-garniture (1), caractérisé en ce que les saillies (9, 16) s'étendent au moins sur une partie de la périphérie des évidements et s'encliquètent dans les évidements (5, 6, 10) correspondants de la plaque porte-garniture (1) avec un ajustement qui permet un jeu de mouvement limité de la tôle d'amortissement (3).

2. Segment de frein selon la revendication 1, caractérisé en ce que les saillies (9, 16) sont situées à une distance des parois des évidements (5, 6) d'environ 0,2 à 0,5 mm.

3. Segment de frein selon la revendication 1 ou 2, caractérisé en ce que les évidements (5, 6) de la plaque porte-garniture (1) se présentent sous une forme étagée et comportent vers la tôle d'amortissement (3) une section d'évidement évasée (10).

4. Segment de frein selon la revendication 3, caractérisé en ce que la section d'évidement (12) côté garniture se rétrécit de manière conique vers la tôle d'amortissement (3).

5. Segment de frein selon la revendication 1 ou 2, caractérisé en ce que les évidements (5, 6) de la plaque porte-garniture (1) se rétrécissent de manière conique dans la direction de la tôle d'amortissement (3).

6. Segment de frein selon l'une quelconque des revendications 1 à 5, caractérisé en ce que les saillies (9) s'étendent sur toute la périphérie des évidements.

7. Segment de frein selon l'une quelconque des revendications 1 à 6, caractérisé en ce que les saillies (9) s'écartent à angle droit de la tôle d'amortissement (3).

8. Segment de frein selon l'une quelconque des revendications 1 à 7, caractérisé en ce que l'ouverture (4) de l'évidement de la plaque porte-garniture (1) est biseautée côté tôle d'amortissement (3).

9. Segment de frein selon l'une quelconque des revendications 1 à 8, caractérisé en ce que la tôle d'amortissement (3) est collée sur la plaque porte-garniture (1).

10. Segment de frein selon l'une quelconque des revendications 1 à 9, caractérisé en ce que les évidements présentent un contour externe polygonal.

11. Segment de frein selon l'une quelconque des revendications 1 à 9, caractérisé en ce que la plaque porte-garniture (1) et la tôle d'amortissement (3) présentent respectivement au moins deux évidements (5, 6, 7, 8) de contour circulaire.

12. Segment de frein selon l'une quelconque des revendications 1 à 9, caractérisé en ce que les saillies (9) sont constituées de plusieurs languettes (16) agencées à distance angulaire égale les unes vis-à-vis des autres, qui se dressent d'un matriçage circulaire (14) de l'évidement respectif (7, 8) et s'encliquètent dans un évidement circulaire ou polygonal (5, 6) de la plaque porte-garniture (1).

13. Segment de frein selon la revendication 12, caractérisé en ce que les languettes (16) ont une forme rectangulaire.

14. Segment de frein pour frein à disque, comportant une plaque porte-garniture (1) symétrique par rapport à un plan du frein à disque orthogonal parallèle à l'axe de rotation du frein à disque, et une garniture de friction (2), ainsi qu'une tôle d'amortissement (3) agencée sur le côté de la plaque porte-garniture (1) opposé à la garniture de friction (2) et fixée vis-à-vis de tout glissement sur la plaque porte-garniture (1) et de toute rotation, la plaque porte-garniture (1) et la tôle d'amortissement (3) présentant respectivement au moins des évidements (5, 6, 7, 8) continus alignés les uns sur les autres et les évidements (7, 8) de la tôle d'amortissement (3) présentant des saillies se dressant dans la direction de la plaque porte-garniture (1), caractérisé en ce que
- le ou les évidements (7, 8) de la tôle d'amortissement présentent au moins deux bords (15) rectilignes en vue de dessus,
- les bords rectilignes (15) s'étendent avec une inclinaison mutuelle opposée par rapport à l'axe radial (18) s'étendant à travers l'axe de symétrie de la plaque porte-garniture (1),
- les bords rectilignes (15) présentent des languettes (16) saillant dans la direction de la plaque porte-garniture, qui s'encliquètent dans les évidements correspondants (5, 6, 10) de la plaque porte-garniture (1) avec un ajustement qui permet un jeu de mouvement limité de la tôle d'amortissement (3) dans une direction parallèle aux bords (15).

15. Segment de frein selon la revendication 14, caractérisé en ce que l'inclinaison des bords rectilignes (15) par rapport à l'axe radial (18) s'étend selon un angle compris entre 0 et 5°.

16. Segment de frein selon la revendication 14 ou 15, caractérisé en ce que les évidements (7, 8) présentent respectivement deux bords (15) rectilignes parallèles l'un à l'autre et pourvus de languettes (16).

17. Segment de frein selon l'une quelconque des revendications 14 à 16, caractérisé en ce que les bords rectilignes (15) des évidements (7, 8) de la tôle d'amortissement (3) convergent l'un par rapport à l'autre dans la direction radiale vers l'extérieur.

18. Segment de frein selon la revendication 14, caractérisé en ce que les évidements (7, 8) présentent trois bords rectilignes (15) sous forme triangulaire, dont les languettes (16) s'encliquètent dans les évidements (5, 6).

19. Segment de frein selon les revendications 14 à 18, caractérisé en ce que les évidements (5, 6) de la plaque porte-garniture (1) sont circulaires et le jeu de mouvement est formé entre les extrémités latérales (17) des languettes (16) et les évidements (5, 6) de la plaque porte-garniture (1).
